(19) **Europäisches Patentamt**

**European Patent Office**

**Office européen des brevets**

(11) **EP 0 711 975 B1**

(12) **EUROPEAN PATENT SPECIFICATION**

(45) Date of publication and mention
of the grant of the patent:
**13.02.2002 Bulletin 2002/07**

(51) Int Cl.⁷: **G01C 19/56**

(21) Application number: **95117882.1**

(22) Date of filing: **13.11.1995**

(54) **Oscillation gyroscope**

Vibrationskreisel

Gyroscope à oscillation

(84) Designated Contracting States:
**DE FR GB**

(30) Priority: **14.11.1994 JP 30555094**
**14.11.1994 JP 30555194**

(43) Date of publication of application:
**15.05.1996 Bulletin 1996/20**

(73) Proprietor: **MURATA MANUFACTURING CO., LTD.**
**Nagaokakyo-shi Kyoto-fu 226 (JP)**

(72) Inventors:
• **Nakamura, Takeshi,**
c/o Murata Manufacturing Co.Ltd
**Nagaokakyo-shi, Kyoto-fu (JP)**
• **Fujimoto, Katsumi,**
c/o Murata Manufacturing Co.Ltd
**Nagaokakyo-shi, Kyoto-fu (JP)**
• **Ebara, Kazuhiro,**
c/o Murata Manufacturing Co.Ltd
**Nagaokakyo-shi, Kyoto-fu (JP)**

(74) Representative: **Schoppe, Fritz, Dipl.-Ing.**
**Schoppe, Zimmermann & Stöckeler**
**Patentanwälte Postfach 71 08 67**
**81458 München (DE)**

(56) References cited:
**EP-A- 0 612 980        US-A- 5 349 857**

EP 0 711 975 B1

**Description**

BACKGROUND OF THE INVENTION

The present invention relates to an oscillation gyroscope and in particular to, for example, an oscillation gyroscope which can detect a rotation angle velocity from changes in a direction of oscillation in a curved oscillation of a vibrating body.

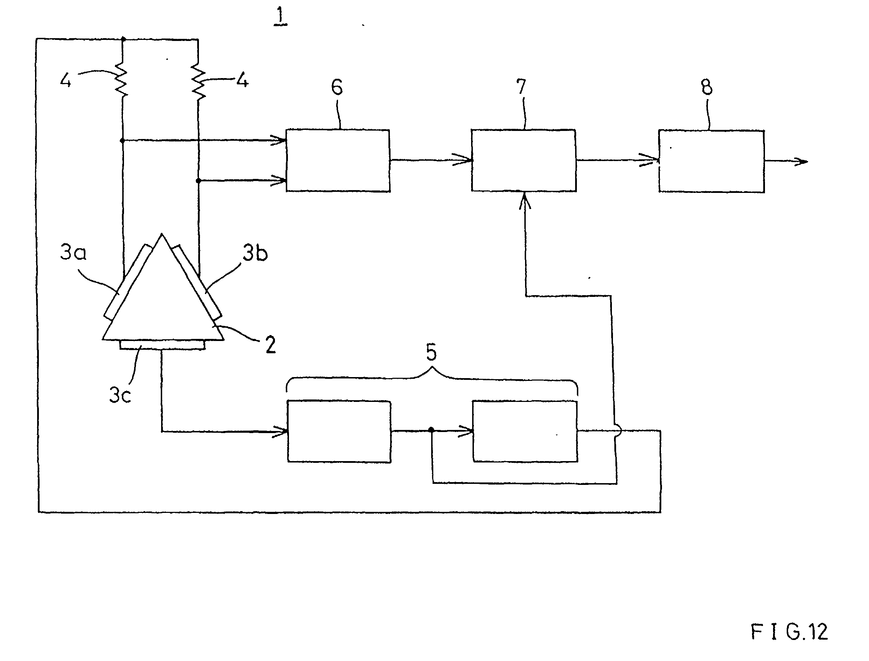

FIG. 12 is an explanatory diagram showing an example of a conventional oscillation gyroscope. The oscillation gyroscope 1 includes, for example, an equilateral triangular prism-shaped vibrating body 2. On the three side surfaces of the vibrating body 2 piezoelectric elements 3a, 3b and 3c are formed. The piezoelectric elements 3a and 3b are used as drivers for curve oscillating the vibrating body 2, and are also used as detectors for detecting a signal corresponding to a rotation angle velocity added to the oscillation gyroscope 1. Also, the piezoelectric element 3c is used as a feedback when self-excited vibrating the vibrating body 2.

Resistors 4 are connected to the piezoelectric elements 3a and 3b, and between these resistors 4 and the feedback piezoelectric element 3c an oscillating circuit 5, formed by for example, an inverted amplification circuit and a phase circuit, is connected. Further, the piezoelectric elements 3a and 3b are connected to a differential amplification circuit 6. The output signal of the differential amplification circuit 6 is detected by the synchronization detection circuit 7 and is further smoothed by a smoothing circuit 8. By means of the signal of the oscillating circuit 5, the vibrating body 2 curvature vibrates in a direction intersecting the formation surface of the piezoelectric element 3c. In this state, ideally, the drive signals inputted to the piezoelectric elements 3a and 3b are the same and a drive signal portion is not outputted from the differential amplification circuit 6. Also, because the vibrating body 2 curvature vibrates in a direction intersecting the formation surface of the piezoelectric element 3c, the signals generated in the piezoelectric elements 3a and 3b are the same and the signals generated in the piezoelectric element 3a and 3b are not outputted from the differential amplification circuit 6. In this manner it is understood that the output signal from the differential amplification circuit 6 is 0 and a rotation angle velocity is not added to the oscillation gyroscope 1.

When the oscillation gyroscope 1 rotates around the axis of the vibrating body 2, the vibration direction of the vibrating body 2 changes due to Coriolis force. Thereby, a difference occurs between the output signals of the piezoelectric elements 3a and 3b and this difference is outputted from the differential amplification circuit 6. The output signal of the differential amplification circuit 6 is detected in synchronism with a signal of the same phase by the synchronization detection circuit 7. Because the output signal level from the differential amplification circuit 6 corresponds to the level of the rotation angle velocity added to the oscillation gyroscope 1, if it is synchronously detected and smoothed by the smoothing circuit 8, the rotation angle velocity can be detected from the level of the output signal of the smoothing circuit 8.

Such an oscillation gyroscope is disclosed in the U.S. Patent No. 5,349,857, for example.

However, in such an oscillation gyroscope 1, since there are variations in the impedance of the piezoelectric elements 3a, 3b and 3c and displacement in the resonance characteristic of the two resonance systems contained in the two piezoelectric elements 3a and 3b, even when the rotation angle velocity is not added to the oscillation gyroscope 1, without the same signal being inputted to the differential amplification circuit 6, a drive signal component is outputted therefrom. For this reason, offset adjustment (so that the output of the smoothing circuit 8 when the angular velocity is not added thereto is 0) is performed by various circuit designs.

However, because a drive signal component is outputted from the differential amplification circuit even where the output signal from the smoothing circuit without rotation is adjusted so that it is 0, if the signal corresponding to the rotation angle velocity is superposed thereon, a large signal is outputted from the differential amplification circuit. As a result, the output dynamic range of the differential amplification circuit and other circuits thereafter must be maintained, thus the circuits must be designed in consideration of cases where the difference between the output signals of the two piezoelectric elements for detection is large, a large rotation angle velocity is added thereto, etc., whereupon the energy consumption of the circuit portion becomes very high. As a result, the energy consumption of the overall circuit structure also becomes very high.

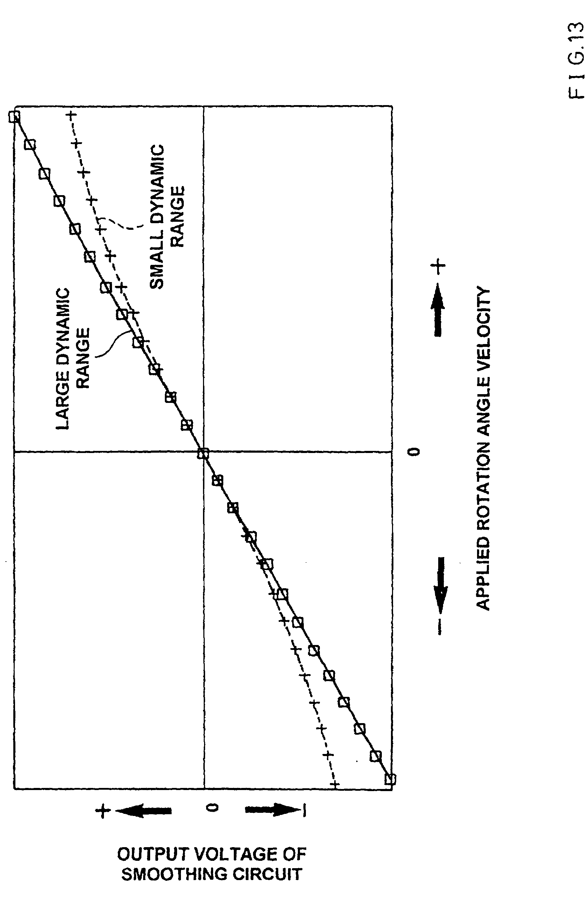

Also, where the dynamic range cannot be sufficiently maintained, if a high rotation angle velocity is added and the output signal of the differential amplification circuit increases, as shown in FIG. 13 the linearity between the rotation angle velocity and the output signal of the smoothing circuit is lost and a difference in sensitivity occurs depending on the direction of the rotation angle velocity.

EP-A-0 612 980 relates to the processing of signals output by a vibratory gyroscope in order to eliminate a drift component by a phase difference or a level difference between two detecting members. Output signals from two detection elements are provided to a first differential amplifier circuit and a summing circuit. The output of the first differential amplifier circuit is connected to a first synchronized detection circuit and a second synchronized detection circuit. The output of the summing circuit is connected to a phase correction circuit, the output of which is connected to the second synchronized detection circuit. The outputs of the first and second synchronized detection circuits are connected to a first and second smoothing circuit, respectively. The output of the first smoothing circuit is directly connected to a first input of a second differential amplifier circuit, whereas the output of the second smoothing circuit is connected to the second differential amplifier circuit via a level adjusting circuit. Thus, the output signal of the first differential amplifier circuit is supplied directly to a first synchronized detection circuit and a second synchronized detection circuit. No signal is added to the output signal of the first differential amplifier circuit. Rather, the output signal of the first differential amplifier circuit is directly supplied to a first and second synchronized detection circuit. In the second synchronized detection circuit, the output of the first differential amplifier circuit is detected in synchronism with the output of the phase compensation circuit. Finally, the output signal of the first smoothing circuit and the output signal of the level adjusting circuit are differentially compared at the second differential amplifier circuit. The output signal of the first smoothing circuit and the level adjusting circuit have already been smoothed.

Given this, the main object of the present invention is to provide an oscillation gyroscope which can maintain linearity between rotation angle velocity and output signals, and can remove the difference in sensitivity due to the direction of the rotation angle velocity, without increasing the dynamic range.

Another object of the present invention is to provide an oscillation gyroscope which can perform offset adjustment, and can maintain linearity between rotation angle velocity and output signals and remove the difference in sensitivity due to the direction of the rotation angle velocity, without increasing the dynamic range.

SUMMARY OF THE INVENTION

This invention is an oscillation gyroscope which includes a vibrating body, a plurality of drive detection means formed on a side surface of the vibrating body and used in common for driving the vibrating body and detecting a signal corresponding to a rotation angle velocity, an oscillator circuit connected to the drive detection means for oscillating the vibrating body, a differential circuit connected to an input terminal of the drive detection means, and an addition signal computing unit for adding the signal corresponding to the rotation angle velocity and at least one signal having the same phase, an inverse phase or a phase difference of 0°, 90° or 180° to an output signal of said differential circuit.

Where this phase difference is 90°, in order to obtain a signal for adding, the oscillator circuit includes an inverse amplification circuit and a phase circuit for adjusting a phase of an output signal of the inverse amplification circuit, and an output signal of the phase circuit is inputted to the addition signal computing unit.

Also, where the phase difference is 90°, the oscillator circuit may include an inverse amplification circuit and a phase circuit for adjusting a phase of an output signal of the inverse amplification circuit, and may further include a phase correction circuit for modifying the phase of the output signal of the inverse amplification circuit, and an output signal of the phase correction circuit may be inputted to the addition signal computing unit.

Further, where the phase difference is 90°, the oscillation gyroscope may include a summation circuit for synthesizing an output signal of the plurality of said drive detection means and a phase correction circuit for modifying a phase of an output signal of said summation circuit, and an output signal of said phase correction circuit may be inputted to said addition signal computing unit.

Where this phase difference is the same phase or an inverse phase, in order to obtain a signal for adding, the oscillator circuit includes an inverse amplification circuit and a phase circuit for adjusting a phase of an output signal of the inverse amplification circuit, and an output signal of the phase circuit is inputted to the addition signal computing unit.

Also, where the phase difference is the same phase or an inverse phase, the oscillator circuit may further include a phase correction circuit for modifying the phase of the output signal of the phase circuit, and an output signal of the phase correction circuit may be inputted to the addition signal computing unit.

Further, where the phase difference is the same phase or an inverse phase, the oscillation gyroscope may include a summation circuit for synthesizing an output signal of the plurality of said drive detection means and a phase correction circuit for modifying a phase of an output signal of said summation circuit, and an output signal of said phase correction circuit may be inputted to said addition signal computing unit.

By adjusting the levels of a signal corresponding to a rotation angle velocity and a signal having a phase difference of 90° and adding them to the output signal of a differential circuit, the level of the output signal of the differential circuit can be reduced. Accordingly, the drive signal component outputted from the differential circuit can be compressed.

Also, by adjusting the levels of a signal corresponding to a rotation angle velocity and a signal of the same phase or an inverse phase and adding them to the output signal of a differential circuit, the phase of the output signal of the differential circuit can be changed and offset adjustment can be achieved. In addition, by adding the above-described signals to the output signal of the differential circuit, the signal level can be reduced.

In order to explain this, the output signal of the differential circuit is calculated as $A \sin (\omega t + \alpha)$ and the signal of the same phase or an inverse phase to a synchronizing signal as $B \cos (\omega t)$. Here, if there is a phase difference of 90° between the output signal of the differential circuit and the synchronizing signal, although it is not necessary to perform offset adjustment, displacement of $\alpha$ will occur due to variations in the oscillation system. Upon adding these signals, a composite signal F(ωt) thereof is as shown in the following equation.

$$F(\omega t) = A \sin(\omega t + \alpha) + B \cos\omega t$$

$$= A \sin\omega t \cos\alpha + A \cos\omega t \sin\alpha + B \cos\omega t$$

$$= A \sin\omega t \cos\alpha + \cos\omega t (A \sin\alpha + B)$$

In order to offset adjust this composite signal, B is adjusted so that it is 0 when integrated between $-\pi/2 \sim \pi/2$. If so adjusted, the output signal of the smoothing circuit can be made 0. Consequently, if integrated within such limits, the following equation is obtained.

$$\int F(\omega t) = 2\omega(A \sin\alpha + B) = 0$$

$$\therefore A \sin\alpha + B = 0$$

Thus, $F(\omega t) = A \sin\omega t \cos\alpha$

Here, since $-1 \leq \cos\alpha \leq 1$, expressing an absolute value as abs,

$$\text{abs}(A \sin\omega t) \geq \text{abs}(F(\omega t))$$

Namely, the level of the output signal of a differential circuit in which there is displacement of $\alpha$ is compressed.

Although the above explanation has been made with reference to a phase difference of 90° it has to be noted that phase differences of 0° or 180° are possible.

According to this invention, since a drive signal component can be compressed by adjusting the level of a signal to be added, even where a signal corresponding to the rotation angle velocity is superposed thereon, the output signal of the differential circuit does not substantially increase. Consequently, it is not necessary to increase the dynamic range of the differential circuit and circuits thereafter more than is necessary, so that the energy consumption of the circuits can be suppressed. From these results, linearity between the rotation angle velocity and the output signal of the oscillation gyroscope can be achieved and differences in sensitivity due to variations in the direction of rotation can be reduced. Also, by adjusting the level of the signal to be added, offset adjustment of the output signal of the oscillation gyroscope can be performed.

The above-described object, and other objects, features and advantages of the present invention can be further understood from the following detailed explanation of embodiments thereof with reference to the drawings. Note that in each embodiment the same reference numbers are used to denote components having substantially the same functions.

BRIEF DESCRIPTION OF THE DRAWINGS

FIG. 1 is an explanatory drawing showing an embodiment of the present invention,

FIG. 2 is a perspective drawing showing an oscillator of the oscillation gyroscope shown in FIG. 1,

FIG. 3 is a cross-sectional drawing of the oscillator shown in FIG. 2,

FIG. 4 is a graph showing signal wave forms of each portion of the oscillation gyroscope shown in FIG. 1,

FIG. 5 is an explanatory drawing showing another embodiment of the present invention,

FIG. 6 is an explanatory drawing showing yet another embodiment of the present invention,

FIG. 7 is an explanatory drawing showing still another embodiment of the present invention,

FIG. 8 is a graph showing signal wave forms of each portion of the oscillation gyroscope shown in FIG. 7,

FIG. 9 is an explanatory drawing showing another embodiment of the present invention,

FIG. 10 is an explanatory drawing showing a further embodiment of the present invention,

FIG. 11 is an explanatory drawing showing a still further embodiment of the present invention,

FIG. 12 is an explanatory drawing showing an example of a prior art oscillation gyroscope, and

FIG. 13 is a graph shown the relationship of an applied rotation angle velocity and the output signal of a smoothing circuit.

DETAILED DESCRIPTION OF THE INVENTION

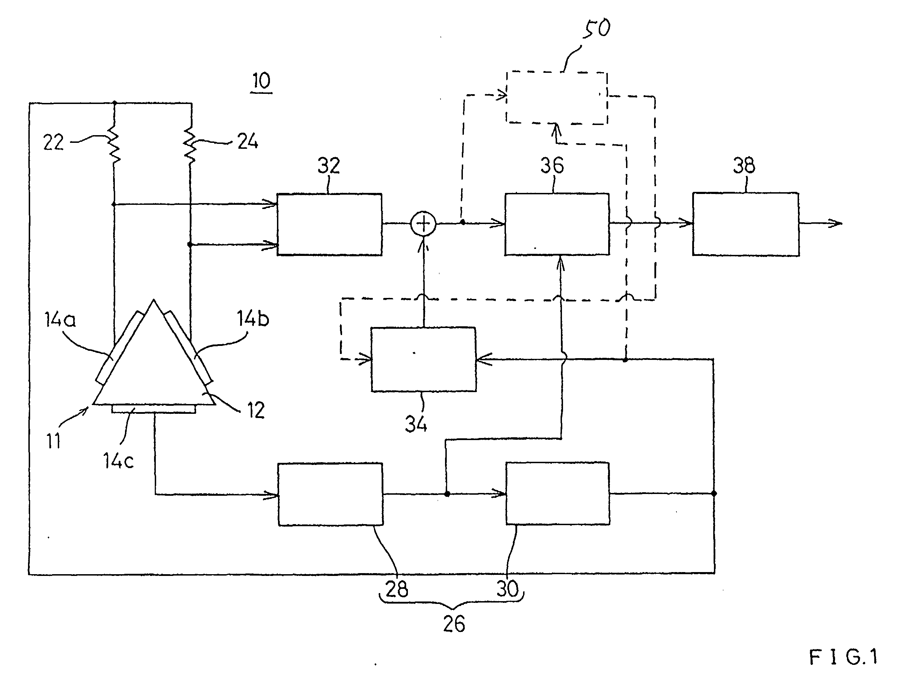

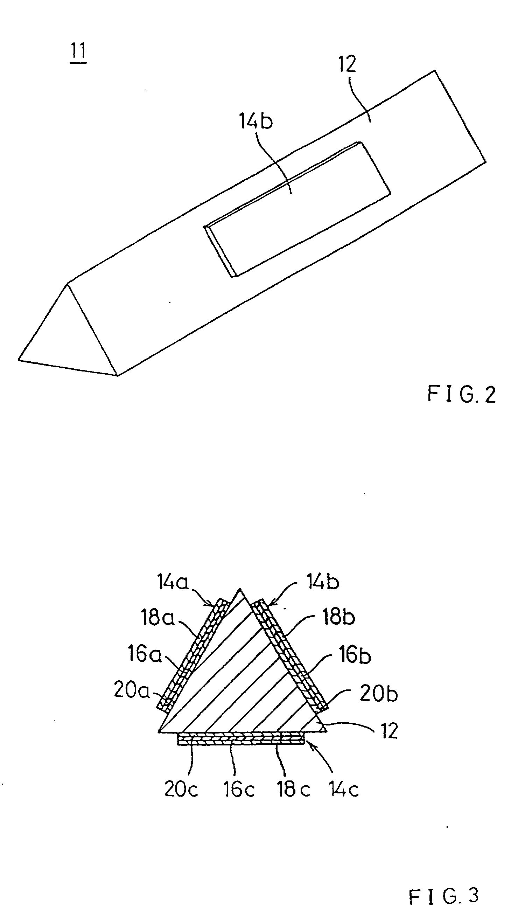

FIG. 1 is an explanatory drawing showing an embodiment of the present invention. An oscillation gyroscope 10 includes an oscillator 11. The oscillator 11, as shown in FIGS. 2 and 3, includes an equilateral triangular prism-shaped vibrating body 12 for example. The vibrating body 12 is formed of a material which generates a normal metallic vibration such as elinvar, an iron-nickel alloy, quartz, glass, a ceramic, etc.

Piezoelectric elements 14a, 14b and 14c are formed in each of the three side faces of the oscillator 12. The piezoelectric element 14a includes a piezoelectric layer 16a formed of a piezoelectric ceramic for example, electrodes 18a and 20a being formed on both surfaces of the piezoelectric layer 16a. Also, one electrode 20a is bonded to the side face of the vibrating body 12. Similarly, the piezoelectric elements 14b and 14c include piezoelectric layers 16b and 16c, electrodes 18b and 20b and electrodes 18c and 20c being formed on both surfaces of the piezoelectric layers 16b and 16c. Also, one of each of the electrodes 20a and 20b is bonded to a side face of the vibrating body 12. The piezoelectric elements 14a and 14b are used for driving for curve vibrating the vibrating body 12, and are also used for detection to obtain a signal corresponding to a rotation angle velocity. Also, the piezoelectric element 14c is used for feedback when the vibrating body 12 is curve vibrated.

Resistors 22 and 24 are respectively connected to the piezoelectric elements 14a and 14b. An oscillator circuit 26 is connected between these resistors 22, 24 and the piezoelectric element 14c. The oscillator circuit 26 includes an inverse amplification circuit 28 and a phase circuit 30. Also, the output signal of the piezoelectric element 14c is fed back to the inverse amplification circuit 28 and the output signal of the inverse amplification circuit 28 is phase corrected by the phase circuit 30 and inputted to the piezoelectric elements 14a and 14b. Thereby, the vibrating body 12 is self-excited vibration driven and curve vibrates in a direction perpendicular to the formation surface of the piezoelectric element 14c.

Further, the piezoelectric elements 14a and 14b are connected to an input terminal of a differential amplification circuit 32. A signal from an addition signal computing unit 34 is added to the output signal of the differential amplification circuit 32. The output signal of the phase circuit 30 is inputted to the addition signal computing unit 34, and a signal of a same phase or inverse phase to this output signal is outputted from the addition signal computing unit 34. At this time, in the addition signal computing unit 34, as explained later, the level of the output signal is adjusted. A composite signal of the output signal of the differential amplification circuit 32 and the output signal of the addition signal computing unit 34 is inputted to a synchronization detection circuit 36. A signal synchronized with the output signal of the inverse amplification circuit 28 is detected by the synchronization detection circuit 36. Further, the output signal of the synchronization detection circuit 36 is smoothed by a smoothing circuit 38.

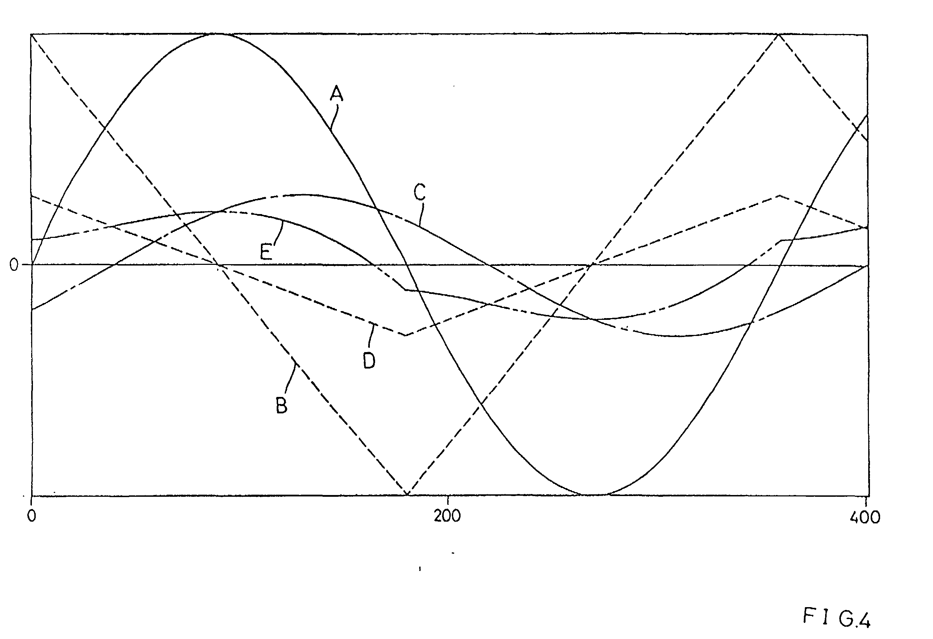

In the oscillation gyroscope 10 shown in FIG. 1, the vibrating body 12 is curve vibrated in a direction perpendicular to the formation surface of the piezoelectric element 14c by the oscillator circuit 26. By means of this curve vibration, a sine wave A is outputted from the piezoelectric element 14c as shown in FIG. 4. This signal is inverse amplified by the inverse amplification circuit 28 and phase corrected by the phase circuit 30, and a signal B having a phase difference of 90° to the output signal of the piezoelectric element 14c is outputted from the phase circuit 30. The output signal of the phase circuit 30 is applied to the piezoelectric elements 14a and 14b so that the vibrating body 12 is self-excited vibration driven.

At this time, due to variations in the impedance of the piezoelectric elements 14a and 14b and variations in the characteristic of the vibration system including the piezoelectric elements 14a and 14b, a signal C of a different phase to the output signal of the phase circuit 30 is outputted from the differential amplification circuit 32. This signal C is synchronized with the signal A and detected, and when this is smoothed, a signal is outputted from the smoothing circuit 38 even without a rotation angle velocity being added to the oscillation gyroscope 10. As a result, in order to make the level of the output signal of the differential amplification circuit 32 become small, a signal having a phase difference of 90° in the advance direction or delay direction to the signal A is added to the output signal of the differential amplification circuit 32. In this embodiment, an addition signal D whose phase is 90° advanced from the signal A, i.e. an addition signal which is advanced by a phase of 90 degrees from a signal corresponding to the rotation angle velocity, is outputted from the addition signal computing unit 34 and added to the output signal of the differential amplification circuit 32.

At this time, as described later, in the portion at which the output signal A of the piezoelectric element 14c is at maximum level for example, the level of the addition signal D is adjusted so that a composite signal E of the output signal C and the addition signal D of the differential amplification circuit 32 is at its maximum level. In other words, the level of the output signal of the differential amplification circuit 32 at the zero cross of the addition signal D is the maximum level of the signal E inputted to the synchronization detection circuit 36. Consequently, by adding such an addition signal D to the output signal of the differential amplification circuit 32, it can be understood that the level of the output signal of the differential amplification circuit 32 is compressed, i.e. its absolute value is reduced.

In this state, rotating about the long axis of the vibrating body 12, the direction of the curve vibration of the vibrating body 12 changes due to Coriolis force. As a result, a signal of the same phase or an inverted phase to the signal A is generated in the piezoelectric elements 14a and 14b. The level of this signal is a value corresponding to the rotation angle velocity level added to the vibrating body 12, and the phase thereof is determined by the direction of the rotation angle velocity. This signal is superposed on the output signal E. Since the signal inputted to the synchronization detection circuit 36 is synchronized with the output signal of the inverse amplification circuit 28 and detected, only the positive portion or the negative portion of the signal corresponding to the rotation angle velocity is detected. Accordingly, if smoothed by the smoothing circuit 38, a direct current signal corresponding to the rotation angle velocity can be obtained. At this time, since a composite of the signal corresponding to the rotation angle velocity and the signal E is inputted to the synchronization detection circuit 36, the output signal of the smoothing circuit 38 also includes the direct current component of the signal E. Accordingly, if the direct current component of the signal E is eliminated in the same manner as the prior art, only the signal corresponding to the rotation angle velocity is obtained.

In this oscillation gyroscope 10, since the drive signal component included in the output signal C is compressed by adding the addition signal D to the output signal C of the differential amplification circuit 32, compared to a case where the addition signal D is not used, even when the signal corresponding to the rotation angle velocity is superposed on the output signal C, the level of the signal inputted to the synchronization detection circuit 36 does not become large. As a result, it is not necessary to increase the dynamic range of the circuit portion and power consumption can be reduced.

Also, by compressing the output signal of the differential amplification circuit 32, even without increasing the range of the circuit portion, a large signal corresponding to the rotation angle velocity can be outputted from the smoothing circuit 38, and the linearity of the output signal of the oscillation gyroscope 10 can be improved. Further, since the linearity of the output signal of the oscillation gyroscope 10 can be improved, variations in sensitivity due to the direction of the rotation angle velocity can be reduced and the rotation angle velocity can be accurately detected. Since the addition signal D has a phase difference of 90° to the signal A used as a synchronization signal, if detected by the synchronization detection circuit 36 and smoothed, there is no addition signal component in the smoothed output. As a result, there is no effect on the sensitivity, output, etc. of the oscillation gyroscope 10, and automatic addition is possible according to the level of the output signal of the differential amplification circuit 32.

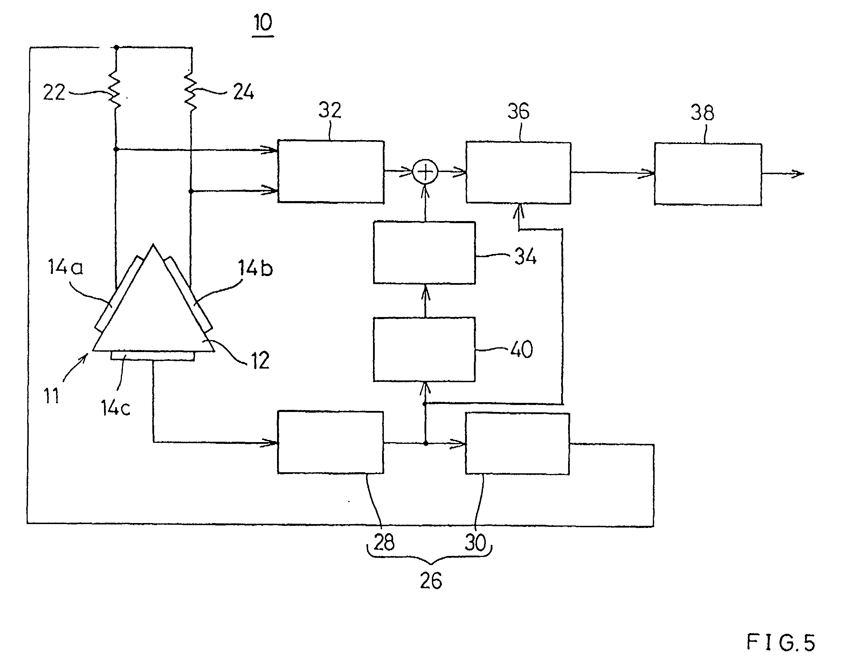

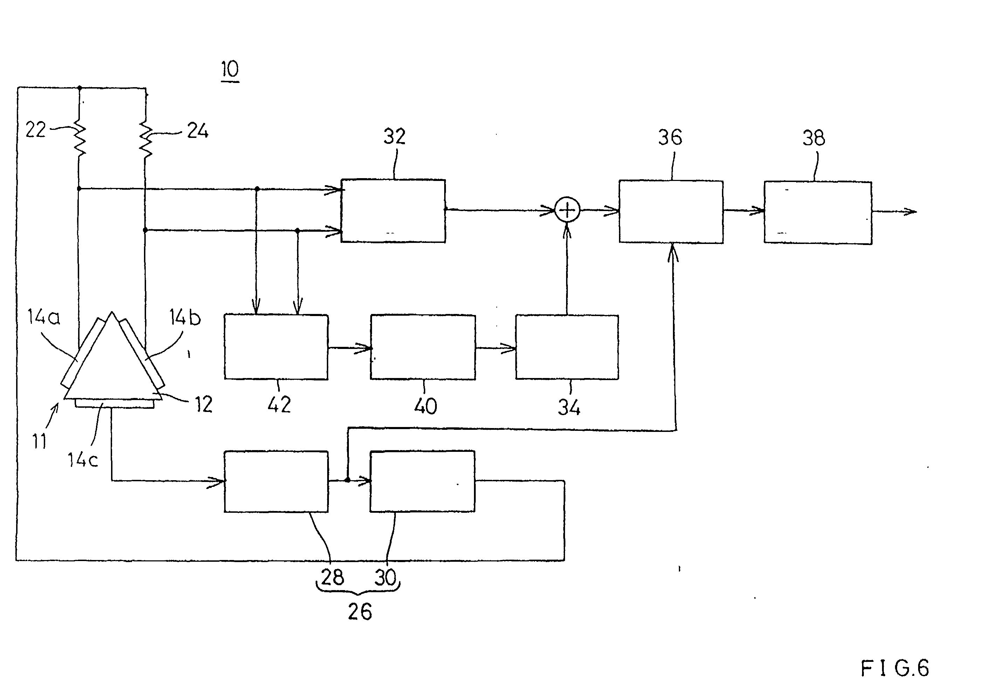

In this manner, in order to perform compression of the drive signal component, for example, as shown by the dotted line in FIG. 1, a signal resulting from the addition of the output signal of the differential amplification circuit 32 and the output signal of the addition signal computing unit 34 may be synchronized with a signal having a phase difference of 90° to the signal A (for example the output signal of the phase circuit 30) and detected by another synchronization detection circuit 50 and this detection output may be inputted to the addition signal computing unit 34, and the level of the output signal of the addition signal computing unit 34 (addition signal D) may be automatically adjusted. In other words, the detection output of the synchronization detection circuit 50 is utilized as an output control signal associated with the level of a direct current component obtained by rectifying the alternating current portion of the detection output or the level of the peak value of such current portion, and the level of the output signal (addition signal D) of the addition signal computing unit 34 added in the interior of the addition signal computing unit 34 is controlled. Note that the circuit portion indicated by the dotted line may be applied to the embodiments shown in FIG. 5 or FIG. 6.

In the oscillation gyroscope 10 shown in FIG. 1, where offset adjustment has been achieved, i.e. when there is a phase difference of 90° between the signal A and the output signal C of the differential amplification circuit 32, by adjusting the level of the addition signal D, the signal C can be offset. In such a case, only a signal corresponding to the rotation angle velocity is outputted without the drive signal component from the smoothing circuit 38 being outputted.

Note that in the embodiment described above, although the output signal of the phase circuit 30 is inputted to the addition signal computing unit 34 in order to obtain an addition signal, as shown in FIG. 5, the output signal of the inverse amplification circuit 28 may be phase corrected by a phase correction circuit 40 and inputted to the addition signal computing unit 34. Also, as shown in FIG. 6, the output signals of the piezoelectric elements 14a and 14b may be synthesized by an adder 42 and the output signal of the adder 42 may be phase corrected by the phase correction circuit 40 and inputted to the addition signal computing unit 34.

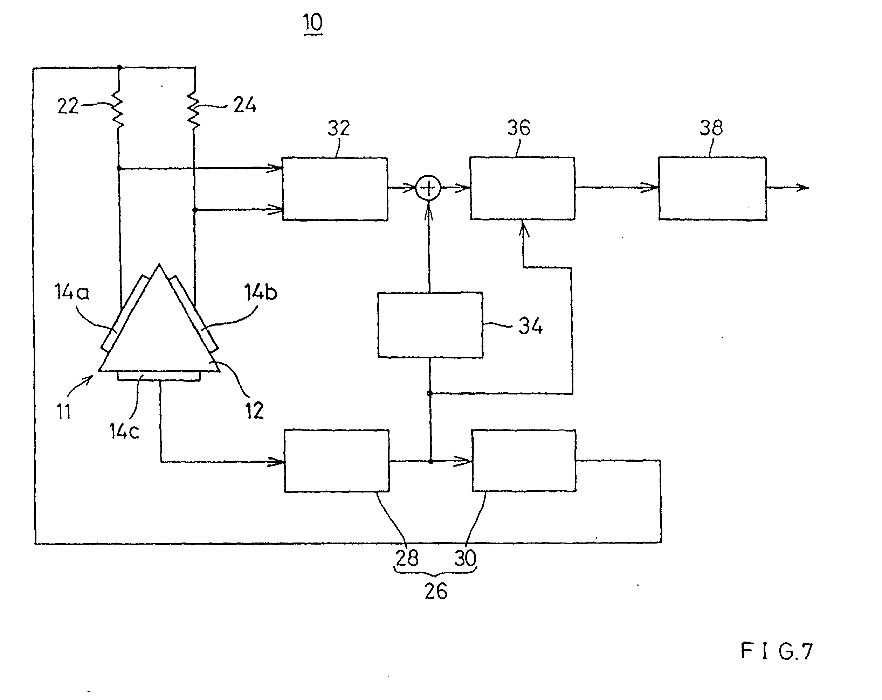

In the embodiment shown in FIG. 7, the output signal of the inverse amplification circuit 28 is inputted to the addition signal computing unit 34 and a signal of the same or an inverse phase to this signal is outputted from the addition signal computing unit 34. The addition signal computing unit 34 can adjust the level of the output signal. A synthesized signal synthesized from the output signal of the differential amplification circuit 32 and the output signal of the addition signal computing unit 34 is inputted to the synchronization detection circuit 36. In the synchronization detection circuit 36 the signal is synchronized with the output signal of the inverse amplification circuit 28 and the resultant signal is detected. Further, the output signal of the synchronization detection circuit 36 is smoothed by the smoothing circuit 38.

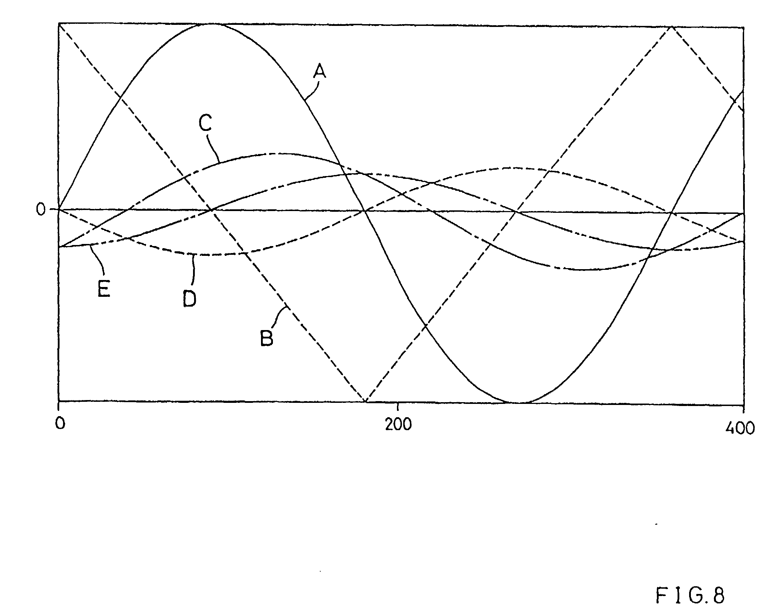

In the embodiment shown in FIG. 7, the vibrating body 12 curve vibrates in a direction perpendicular to the formation surface of the piezoelectric element 14c by means of the oscillator circuit 26. Due to this curve vibration, a sine wave A as shown in FIG. 8 is outputted from the piezoelectric element 14c. This signal is inverse amplified by the inverse amplification circuit 28 and phase corrected by the phase circuit 30, and a signal B having a phase difference of 90° to the output signal of the piezoelectric element 14c is outputted from the phase circuit 30. This output signal of the phase circuit 30 is applied to the piezoelectric elements 14a and 14b and the vibrating body 12 is self-excited vibration driven.

At this time, due to variations in the impedance of the piezoelectric elements 14a and 14b, variations in the characteristic of the vibration system including the piezoelectric elements 14a and 14b, etc., a signal C having a different phase to the output signal of the phase circuit 30 is outputted. This signal C is synchronized with the signal A and detected, and upon this signal being smoothed, a signal is outputted from the smoothing circuit 38, even when the rotation angle velocity is not added to the oscillation gyroscope 10. Thus, in order to perform offset adjustment, a signal having the same or an inverse phase to the signal A is added to the output signal of the differential amplification circuit 32. In this embodiment, an addition signal of inverse phase to the signal A, i.e. an addition signal D of the same phase as the output signal of the inverse amplification circuit 28, is outputted from the addition signal computing unit 34 and added to the output signal of the differential amplification circuit 32.

At this time, in the maximum level portion of the output signal A of the piezoelectric element 14c, the level of the addition signal D is set so that the composite signal E synthesized from the output signal C of the differential amplification circuit 32 and the addition signal D is 0. Accordingly, in the synchronization detection circuit 36, if the positive portion of the signal A for example, i.e. the negative portion of the output signal of the inverse amplification circuit 28, is synchronized and the signal E is detected, the areas of the positive portion and the negative portion of the signal E are equivalent. Thus, if the output signal of the synchronization detection circuit 36 is smoothed by the smoothing circuit 38, the output signal thereof is 0, i.e. offset adjusted. Further, since in this way the addition signal D is added to the output signal of the differential amplification circuit 32, it can be understood that the level of the output signal of the differential amplification circuit 32 is compressed, i.e. its absolute value is reduced.

In this state, rotating about the long axis of the vibrating body 12, the direction of the curve vibration of the vibrating body 12 is changed by Coriolis force. As a result, a signal of a same phase or inverse phase to the signal A is generated in the piezoelectric elements 14a and 14b. The signal level thereof is a value corresponding to the level of the rotation angle velocity added to the vibrating body 12, whose phase is determined by the direction of the rotation angle velocity. This signal is superposed on the output signal E. Because the signal inputted to the synchronization detection circuit 36 is synchronized with the output signal of the inverse amplification circuit 28 and detected, only the positive portion or the negative portion of the signal corresponding to the rotation angle velocity is detected. Accordingly, if it is smoothed by the smoothing circuit 38 a direct current signal corresponding to the rotation angle velocity can be obtained. At this time, because the drive signal component is 0, only a signal corresponding to the rotation angle velocity is obtained.

Also in the oscillation gyroscope 10 shown in FIG. 7, because the drive signal component is compressed by adding the addition signal, compared to a case where the addition signal is not utilized, even where the signal corresponding to the rotation angle velocity is superposed, the level of the signal inputted to the synchronization detection circuit 36 does not become large. As a consequence, it is not necessary to increase the dynamic range of the circuit portion and energy consumption can be reduced.

Also, by compressing the output signal of the differential amplification circuit 32, even without increasing the dynamic range of the circuit portion, the large signal corresponding to the rotation angle velocity can be outputted from the smoothing circuit 38 and the linearity of the output signal of the oscillation gyroscope 10 can be improved. Further, because the linearity of the output signal of the oscillation gyroscope 10 can be improved, variations in sensitivity according to the direction of the rotation angle velocity can be reduced and the rotation angle velocity can be accurately detected. In this manner, in order to perform compression of the drive signal component as well as performing offset adjustment, the level of the addition signal D may be adjusted so that the output signal of the smoothing circuit 38 when the rotation angle velocity is not added is 0.

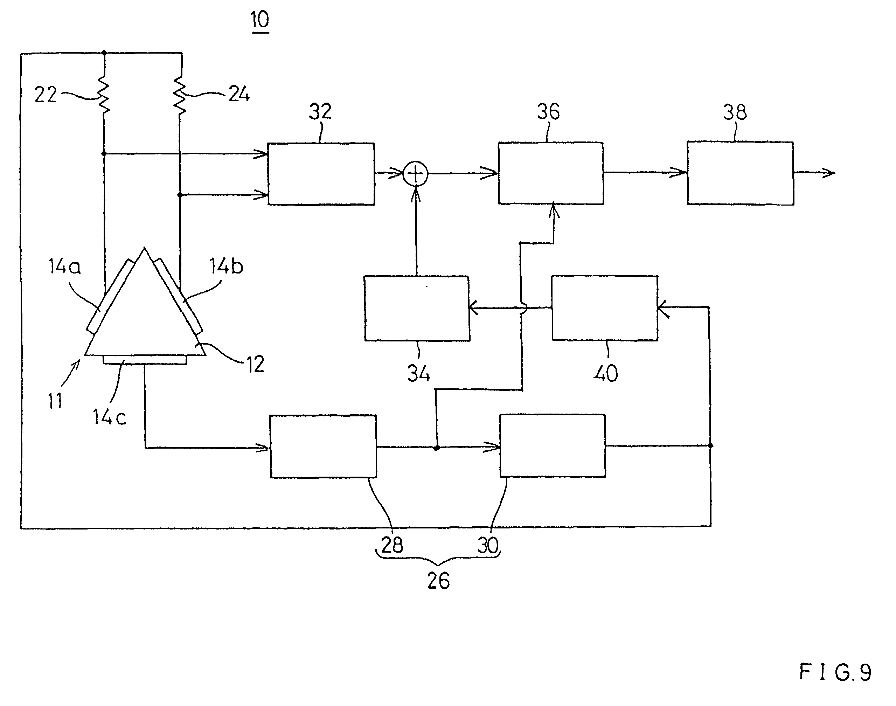

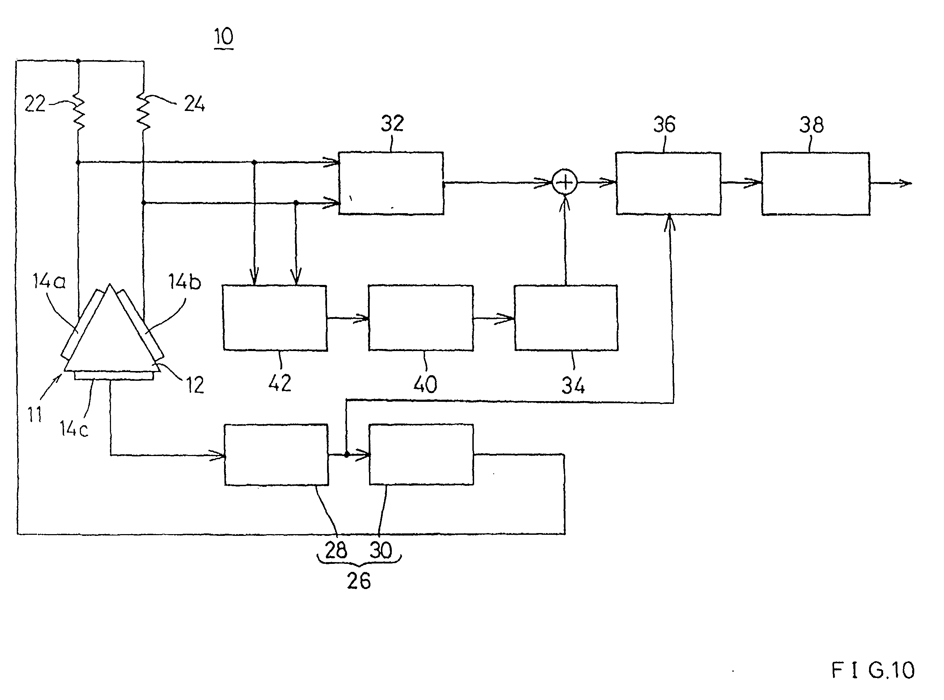

Note that in the embodiment shown in FIG. 7, although the output signal of the inverse amplification circuit 28 is inputted to the addition signal computing unit 34, as shown in FIG. 9, the output signal of the phase circuit 30 may be phase corrected by the phase correction circuit 40 and inputted to the addition signal computing unit 34. Also, as shown in FIG. 10, the output signals of the piezoelectric elements 14a and 14b may be synthesized by the adder 42 and the output signal of the adder 42 may be phase corrected by the phase correction circuit 40 and then inputted to the addition signal computing unit 34.

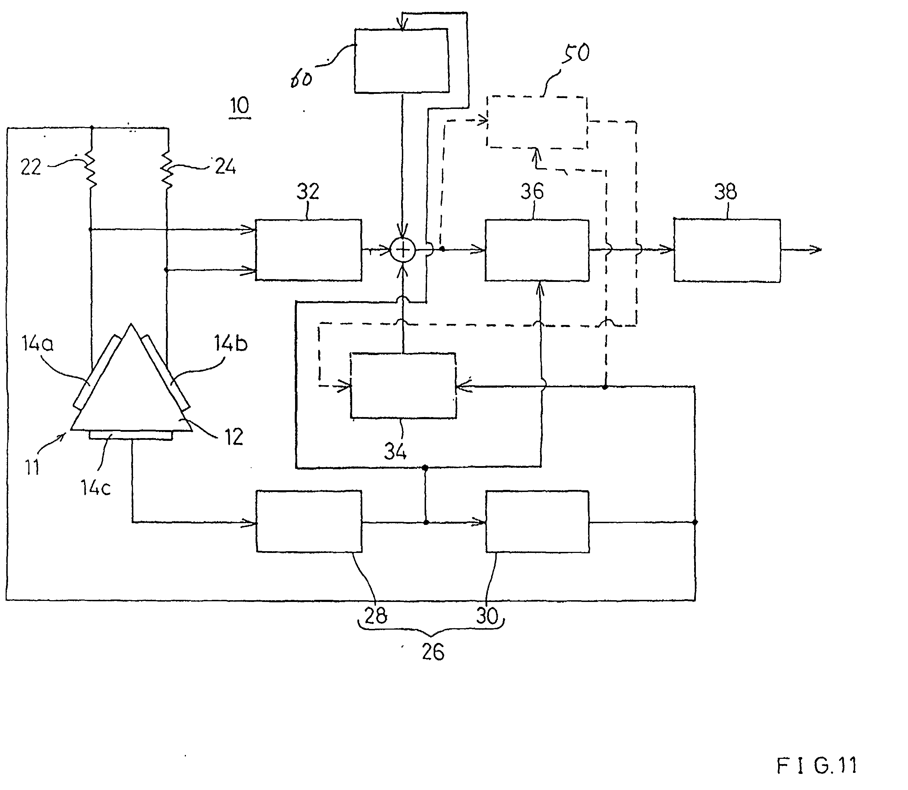

Also, in each of the embodiments shown in FIG. 1, FIG. 5 or FIG. 6, offset adjustment may be performed by a combination of offset adjustment circuit portions shown in any one of the embodiments of FIG. 7, FIG. 9 or FIG. 10 without using prior art circuitry. For example, in FIG. 11, an embodiment is shown in which the addition signal computing unit 34 shown in FIG. 7 is added to the circuit shown in FIG. 1. An output signal of the inverse amplification circuit 28 is added to the input terminal of the addition signal computing unit 34 shown FIG. 7. The output signal appearing at the output terminal of the addition signal computing unit 34 shown in FIG. 7 is superposed on the output signal of the differential amplification circuit 32 and the output signal of the addition signal computing unit 34 shown in FIG. 1. In other words, in FIG. 11, the addition signal computing unit 34 is the same as that shown in FIG. 1 and the addition signal computing unit 60 is the same as the addition signal computing unit 34 shown in FIG. 7. In the same manner, there are a combination of the embodiment of FIG. 1 and the embodiment of FIG. 9, a combination of the embodiment of FIG. 1 and the embodiment of FIG. 10, a combination of the embodiment of FIG. 5 and the embodiment of FIG. 7, a combination of the embodiment of FIG. 5 and the embodiment of FIG. 9, a combination of the embodiment of FIG. 5 and the embodiment of FIG. 10, a combination of the embodiment of FIG. 6 and the embodiment of FIG. 7, a combination of the embodiment of FIG. 6 and the embodiment of FIG. 9, and a combination of the embodiment of FIG. 6 and the embodiment of FIG. 10.

Also, in each of the above-described embodiments, although the piezoelectric elements 14a, 14b and 14c are bonded to the vibrating body 12 to form an oscillator 11, the vibrating body 12 may be formed by a piezoelectric material and electrodes may be formed in place of the piezoelectric elements 14a to 14c. Further, the shape of the vibrating body 12 is not limited to an equilateral triangular prism shape, but may be formed in another prism shape or a cylindrical shape. These oscillators can be applied to the present invention if a plurality of driven detection piezoelectric elements or electrodes are formed. In the above-described embodiments a phase difference of 90° was used. However phase differences different from the described 90° can be used, for example phase differences of 0° or 180°.

IN THE DRAWINGS:

FIG. 1

| | |
|---|---|
| 28: | INVERSE AMPLIFICATION CIRCUIT |
| 30: | PHASE CIRCUIT |
| 32: | DIFFERENTIAL AMPLIFICATION CIRCUIT |
| 34: | ADDITION SIGNAL COMPUTING UNIT |
| 36: | SYNCHRONIZATION DETECTION CIRCUIT |
| 38: | SMOOTHING CIRCUIT |
| | OUTPUT |

FIG. 4

VOLTAGE
PHASE (deg)

FIG. 5

| | |
|---|---|
| 28: | INVERSE AMPLIFICATION CIRCUIT |
| 30: | PHASE CIRCUIT |
| 32: | DIFFERENTIAL AMPLIFICATION CIRCUIT |
| 34: | ADDITION SIGNAL COMPUTING UNIT |
| 36: | SYNCHRONIZATION DETECTION CIRCUIT |
| 38: | SMOOTHING CIRCUIT |
| 40: | PHASE CORRECTION CIRCUIT |
| | OUTPUT |

FIG. 6

| | |
|---|---|
| 28: | INVERSE AMPLIFICATION CIRCUIT |
| 30: | PHASE CIRCUIT |
| 32: | DIFFERENTIAL AMPLIFICATION CIRCUIT |
| 34: | ADDITION SIGNAL COMPUTING UNIT |
| 36: | SYNCHRONIZATION DETECTION CIRCUIT |
| 38: | SMOOTHING CIRCUIT |
| 40: | PHASE CORRECTION CIRCUIT |
| 42: | ADDER |
| | OUTPUT |

FIG. 7

| | |
|---|---|
| 28: | INVERSE AMPLIFICATION CIRCUIT |
| 30: | PHASE CIRCUIT |
| 32: | DIFFERENTIAL AMPLIFICATION CIRCUIT |
| 34: | ADDITION SIGNAL COMPUTING UNIT |
| 36: | SYNCHRONIZATION DETECTION CIRCUIT |
| 38: | SMOOTHING CIRCUIT |
| | OUTPUT |

FIG. 8

VOLTAGE
PHASE (deg)

FIG. 9

| | |
|---|---|
| 28: | INVERSE AMPLIFICATION CIRCUIT |
| 30: | PHASE CIRCUIT |
| 32: | DIFFERENTIAL AMPLIFICATION CIRCUIT |
| 34: | ADDITION SIGNAL COMPUTING UNIT |
| 36: | SYNCHRONIZATION DETECTION CIRCUIT |
| 38: | SMOOTHING CIRCUIT |
| 40: | PHASE CORRECTION CIRCUIT |
| | OUTPUT |

FIG. 10

| | |
|---|---|
| 28: | INVERSE AMPLIFICATION CIRCUIT |
| 30: | PHASE CIRCUIT |
| 32: | DIFFERENTIAL AMPLIFICATION CIRCUIT |
| 34: | ADDITION SIGNAL COMPUTING UNIT |
| 36: | SYNCHRONIZATION DETECTION CIRCUIT |
| 38: | SMOOTHING CIRCUIT |
| 40: | PHASE CORRECTION CIRCUIT |
| 42: | ADDER |
| | OUTPUT |

FIG. 11

| | |
|---|---|
| 28: | INVERSE AMPLIFICATION CIRCUIT |
| 30: | PHASE CIRCUIT |
| 32: | DIFFERENTIAL AMPLIFICATION CIRCUIT |
| 34: | ADDITION SIGNAL COMPUTING UNIT |

36: SYNCHRONIZATION DETECTION CIRCUIT
38: SMOOTHING CIRCUIT
OUTPUT

FIG. 12

5: INVERSE AMPLIFICATION CIRCUIT
PHASE CIRCUIT
6: DIFFERENTIAL AMPLIFICATION CIRCUIT
7: SYNCHRONIZATION DETECTION CIRCUIT
8: SMOOTHING CIRCUIT
OUTPUT

FIG. 13

OUTPUT VOLTAGE OF SMOOTHING CIRCUIT
APPLIED ROTATION ANGLE VELOCITY
LARGE DYNAMIC RANGE
SMALL DYNAMIC RANGE

**Claims**

1. An oscillation gyroscope comprising:

a drivable vibrating body (12);

a plurality of drive/detection devices (14a, 14b) formed on side surfaces of said vibrating body (12) and operable for both driving said vibrating body (12) and detecting signals corresponding to a rotation angle velocity of said vibrating body (12);

an oscillator circuit (26), connected to said drive/detection devices (14a, 14b), for driving said vibrating body (12);

a differential circuit (32) connected to said drive/detection devices (14a, 14b) for receiving said signals from each of said drive/detection devices (14a, 14b) and outputting a differential output signal (C) corresponding to the rotation angular velocity; **characterized by**

an addition signal computing unit (34) connected to the oscillator circuit (26) for receiving the output signal (B) of the oscillator circuit (26) and for computing a signal (D) having a phase difference selected from the group consisting of 0°, 90° and 180° with respect to said differential output signal (C), and for adding the signal to said differential output signal (C),

wherein said phase difference and an amplitude of said signal (D) from said addition signal computing unit (34) are such that a signal (E) obtained by adding said signal (D) from said addition signal computing unit (34) and said differential output signal (C) under the condition that no rotation angular velocity is applied to said vibrating body (12) has an amplitude less than that of said differential output signal (C).

2. The oscillation gyroscope according to claim 1, wherein said phase difference is 90°, said oscillator circuit (26) includes an inverse amplification circuit (28) and a phase circuit (30) for adjusting a phase of an output signal of said inverse amplification circuit (28), and an output signal (B) of said phase circuit (30) is inputted to said addition signal computing unit (34).

3. The oscillation gyroscope according to claim 1, wherein said phase difference is 90°, said oscillator circuit (26) includes an inverse amplification circuit (28) and a phase circuit (30) for adjusting a phase of an output signal of said inverse amplification circuit (28), and said oscillator circuit further includes a phase correction circuit (40) for modifying the phase of the output signal of said inverse amplification circuit (28), and an output signal of said phase correction circuit (40) is inputted to said addition signal computing unit (34).

4. The oscillation gyroscope according to claim 1, wherein said phase difference is 90°, further comprising a summation circuit (42) for synthesizing an output signal of the plurality of said drive/detection devices (14a, 14b) and a phase correction circuit (40) for modifying a phase of an output signal of said summation circuit (42), and wherein an output signal of said phase correction circuit (40) is inputted to said addition signal computing unit (34).

5. The oscillation gyroscope according to claim 1, wherein said phase difference is 0°, said oscillator circuit (26) includes an inverse amplification circuit (28) and a phase circuit (30) for adjusting a phase of an output signal of said inverse amplification circuit (28), and an output signal of said phase circuit (30) is inputted to said addition signal computing unit (34).

6. The oscillation gyroscope according to claim 1, wherein said phase difference is 0°, further including a phase correction circuit (40) for modifying the phase of the output signal of said inverse amplification circuit (28), and wherein an output signal of said phase correction circuit (40) is inputted to said addition signal computing unit (34).

7. The oscillation gyroscope according to claim 1, wherein said phase difference is 0°, further comprising a summation circuit (42) for synthesizing an output signal of the plurality of said drive/detection devices (14a, 14b) and a phase correction circuit (40) for modifying a phase of an output signal of said summation circuit (42), and wherein an output signal of said phase correction circuit (40) is inputted to said addition signal computing unit (34).

8. The oscillation gyroscope according to claim 1, wherein said phase difference is 180°, said oscillator circuit (26) includes an inverse amplification circuit (28) and a phase circuit (30) for adjusting a phase of an output signal of said inverse amplification circuit (28), and an output signal of said phase circuit (30) is inputted to said addition signal computing unit (34).

9. The oscillation gyroscope according to claim 1, wherein said phase difference is 180°, further including a phase correction circuit (40) for modifying the phase of the output signal of said inverse amplification circuit (28), and wherein an output signal of said phase correction circuit (40) is inputted to said addition signal computing unit (34).

10. The oscillation gyroscope according to claim 1, wherein said phase difference is 180°, further comprising a summation circuit (42) for synthesizing an output signal of the plurality of said drive/detection devices (14a, 14b) and a phase correction circuit for modifying a phase of an output signal of said summation circuit (42), and wherein an output signal of said phase correction circuit (40) is inputted to said addition signal computing unit (34).

11. The oscillation gyroscope according to claim 1, further comprising a synchronous detector (50) wherein a signal made up of said differential output signal of said differential circuit (32) and said output signal of said addition signal computing unit (34) is detected by being synchronized with signals corresponding to rotation angle velocities in the synchronous detector (50), and the output of the synchronous detector is supplied to the addition signal computing unit (34) so as to control the level of an output signal of the addition signal computing unit (34).

**Patentansprüche**

1. Ein Oszillationsgyroskop mit folgenden Merkmalen:

einem treibbaren Schwingkörper (12);

einer Mehrzahl von Treiber-/Erfassungsvorrichtungen (14a, 14b), die auf Seitenoberflächen des Schwingkörpers (12) gebildet sind und betreibbar sind, um sowohl den Schwingkörper (12) zu treiben als auch um Signale zu erfassen, die einer Drehwinkelgeschwindigkeit des Schwingkörpers (12) entsprechen;

einer Oszillatorschaltung (26), die mit den Treiber/Erfassungsvorrichtungen (14a, 14b) verbunden ist, zum Treiben des Schwingkörpers (12);

einer Differenzschaltung (32), die mit den Treiber/Erfassungsvorrichtungen (14a, 14b) verbunden ist, zum Empfangen der Signale von jeder der Treiber/Erfassungsvorrichtungen (14a, 14b) und zum Ausgeben eines Differenzausgangssignals (C), das der Drehwinkelgeschwindigkeit entspricht; **gekennzeichnet durch**

eine Hinzufügungssignal-Recheneinheit (34), die mit der Oszillatorschaltung (26) verbunden ist, zum Empfangen des Ausgangssignals (B) der Oszillatorschaltung (26) und zum Berechnen eines Signals (D), das einen Phasenunterschied, der aus der Gruppe ausgewählt ist, die aus 0°, 90° und 180° besteht, bezüglich des Differenzausgangssignals (C) aufweist, und zum Hinzufügen des Signals zu dem Differenzausgangssignal (C),

wobei der Phasenunterschied und eine Amplitude des Signals (D) von der Hinzufügungssignal-Recheneinheit (34) derart sind, daß ein Signal (E), das **durch** Hinzufügen des Signals (D) von der Hinzufügungssignal-Recheneinheit (34) zu dem Differenzausgangssignal (C) unter der Bedingung, daß an den Schwingkörper (12) keine Drehwinkelgeschwindigkeit angelegt wird, erhalten wird, eine Amplitude aufweist, die geringer ist als die des Differenzausgangssignals (C).

2. Das Oszillationsgyroskop gemäß Anspruch 1, bei dem der Phasenunterschied 90° beträgt, wobei die Oszillatorschaltung (26) eine Inversverstärkungsschaltung (28) und eine Phasenschaltung (30) zum Einstellen einer Phase eines Ausgangssignals der Inversverstärkungsschaltung (28) aufweist, und wobei ein Ausgangssignal (B) der Phasenschaltung (30) in die Hinzufügungssignal-Recheneinheit (34) eingegeben wird.

3. Das Oszillationsgyroskop gemäß Anspruch 1, bei dem der Phasenunterschied 90° beträgt, wobei die Oszillatorschaltung (26) eine Inversverstärkungsschaltung (28) und eine Phasenschaltung (30) zum Einstellen einer Phase eines Ausgangssignals der Inversverstärkungsschaltung (28) umfaßt, und wobei die Oszillatorschaltung ferner eine Phasenkorrekturschaltung (40) zum Modifizieren der Phase des Ausgangssignals der Inversverstärkungsschaltung (28) umfaßt, und wobei ein Ausgangssignal der Phasenkorrekturschaltung (40) in die Hinzufügungssignal-Recheneinheit (34) eingegeben wird.

4. Das Oszillationsgyroskop gemäß Anspruch 1, bei dem der Phasenunterschied 90° beträgt und das ferner eine Summierschaltung (42) zum Synthetisieren eines Ausgangssignals der Mehrzahl der Treiber/Erfassungsvorrichtungen (14a, 14b) und eine Phasenkorrekturschaltung (40) zum Modifizieren einer Phase eines Ausgangssignals der Summierschaltung (42) aufweist, und bei dem ein Ausgangssignal der Phasenkorrekturschaltung (40) in die HinzufügungssignalRecheneinheit (34) eingegeben wird.

5. Das Oszillationsgyroskop gemäß Anspruch 1, bei dem der Phasenunterschied 0° beträgt, wobei die Oszillatorschaltung (26) eine Inversverstärkungsschaltung (28) und eine Phasenschaltung (30) zum Einstellen einer Phase eines Ausgangssignals der Inversverstärkungsschaltung (28) umfaßt, und wobei ein Ausgangssignal der Phasenschaltung (30) in die Hinzufügungssignal-Recheneinheit (34) eingegeben wird.

6. Das Oszillationsgyroskop gemäß Anspruch 1, bei dem der Phasenunterschied 0° beträgt und das ferner eine Phasenkorrekturschaltung (40) zum Modifizieren der Phase des Ausgangssignals der Inversverstärkungsschaltung (28) umfaßt, wobei ein Ausgangssignal der Phasenkorrekturschaltung (40) in die Hinzufügungssignal-Recheneinheit (34) eingegeben wird.

7. Das Oszillationsgyroskop gemäß Anspruch 1, bei dem der Phasenunterschied 0° beträgt und das ferner eine Summierschaltung (42) zum Synthetisieren eines Ausgangssignals der Mehrzahl der Treiber/Erfassungsvorrichtungen (14a, 14b) und eine Phasenkorrekturschaltung (40) zum Modifizieren einer Phase eines Ausgangssignals der Summierschaltung (42) aufweist, und bei dem ein Ausgangssignal der Phasenkorrekturschaltung (40) in die Hinzufügungssignal-Recheneinheit (34) eingegeben wird.

8. Das Oszillationsgyroskop gemäß Anspruch 1, bei dem der Phasenunterschied 180° beträgt, die Oszillatorschaltung (26) eine Inversverstärkungsschaltung (28) und eine Phasenschaltung (30) zum Einstellen einer Phase eines Ausgangssignals der Inversverstärkungsschaltung (28) umfaßt, und bei dem ein Ausgangssignal der Phasenschaltung (30) in die Hinzufügungssignal-Recheneinheit (34) eingegeben wird.

9. Das Oszillationsgyroskop gemäß Anspruch 1, bei dem der Phasenunterschied 180° beträgt und das ferner eine Phasenkorrekturschaltung (40) zum Modifizieren der Phase des Ausgangssignals der Inversverstärkungsschaltung (28) umfaßt, und bei dem ein Ausgangssignal der Phasenkorrekturschaltung (40) in die Hinzufügungssignal-Recheneinheit (34) eingegeben wird.

10. Das Oszillationsgyroskop gemäß Anspruch 1, bei dem der Phasenunterschied 180° beträgt und das ferner eine Summierschaltung (42) zum Synthetisieren eines Ausgangssignals der Mehrzahl der Treiber/Erfassungsvorrichtungen (14a, 14b) und eine Phasenkorrekturschaltung zum Modifizieren der Phase eines Ausgangssignals der Summierschaltung (42) aufweist, und bei dem ein Ausgangssignal der Phasenkorrekturschaltung (40) in die Hinzufügungssignal-Recheneinheit (34) eingegeben wird.

11. Das Oszillationsgyroskop gemäß Anspruch 1, das ferner einen Synchrondetektor (50) aufweist, bei dem ein Signal, das aus dem Differenzausgangssignal der Differenzschaltung (32) und dem Ausgangssignal der Hinzufügungssignal-Recheneinheit (34) besteht, erfaßt wird, indem es bei dem Synchrondetektor mit Signalen synchronisiert wird, die Drehwinkelgeschwindigkeiten entsprechen, wobei das Ausgangssignal des Synchrondetektors (50) der Hinzufügungssignal-Recheneinheit (34) geliefert wird, um den Pegel eines Ausgangssignals der Hinzufügungssignal-Recheneinheit (34) zu steuern.

## Revendications

1. Gyroscope à oscillation comprenant :

un corps vibrant pilotable (12) ;
une pluralité de dispositifs de pilotage/détection (14a, 14b) qui sont formés sur des surfaces latérales dudit corps vibrant (12) et qui peuvent fonctionner pour à la fois piloter ledit corps vibrant (12) et détecter des signaux correspondant à une vitesse angulaire de rotation dudit corps vibrant (12) ;
un circuit d'oscillateur (26), qui est connecté auxdits dispositifs de pilotage/détection (14a, 14b), pour piloter ledit corps vibrant (12) ;
un circuit différentiel (32) qui est connecté auxdits dispositifs de pilotage/détection (14a, 14b) pour recevoir lesdits signaux en provenance de chacun desdits dispositifs de pilotage/détection (14a, 14b) et pour émettre en sortie un signal de sortie différentiel (C) qui correspond à la vitesse angulaire de rotation,

**caractérisé par** :

une unité de calcul de signal d'addition (34) qui est connectée au circuit d'oscillateur (26) pour recevoir le signal de sortie (B) du circuit d'oscillateur (26) et pour calculer un signal (D) présentant une différence de phase choisie parmi le groupe comprenant 0°, 90° et 180° par rapport audit signal de sortie différentiel (C) et pour additionner le signal audit signal de sortie différentiel (C),

dans lequel ladite différence de phase et une amplitude dudit signal (D) en provenance de ladite unité de calcul de signal d'addition (34) sont telles qu'un signal (E) qui est obtenu en additionnant ledit signal (D) en provenance de ladite unité de calcul de signal d'addition (34) et ledit signal de sortie différentiel (C) sous la condition consistant en ce qu'aucune vitesse angulaire de rotation n'est appliquée audit corps vibrant (12) présente une amplitude inférieure à celle dudit signal de sortie différentiel (C).

2. Gyroscope à oscillation selon la revendication 1, dans lequel ladite différence de phase est de 90°, ledit circuit d'oscillateur (26) inclut un circuit d'amplification inverse (28) et un circuit de phase (30) pour régler une phase d'un signal de sortie dudit circuit d'amplification inverse (28), et un signal de sortie (B) dudit circuit de phase (30) est entré sur ladite unité de calcul de signal d'addition (34).

3. Gyroscope à oscillation selon la revendication 1, dans lequel ladite différence de phase vaut 90°, ledit circuit d'oscillateur (26) inclut un circuit d'amplification inverse (28) et un circuit de phase (30) pour régler une phase d'un signal de sortie dudit circuit d'amplification inverse (28), et ledit circuit d'oscillateur inclut en outre un circuit de correction de phase (40) pour modifier la phase du signal de sortie dudit circuit d'amplification inverse (28), et un signal de sortie dudit circuit de correction de phase (40) est entré sur ladite unité de calcul de signal d'addition (34).

4. Gyroscope à oscillation selon la revendication 1, dans lequel ladite différence de phase vaut 90°, comprenant en outre un circuit de sommation (42) pour synthétiser un signal de sortie de la pluralité desdits dispositifs de pilotage/détection (14a, 14b) et un circuit de correction de phase (40) pour modifier une phase d'un signal de sortie dudit circuit de sommation (42), et dans lequel un signal de sortie dudit circuit de correction de phase (40) est entré sur ladite unité de calcul de signal d'addition (34).

5. Gyroscope à oscillation selon la revendication 1, dans lequel ladite différence de phase vaut 0°, ledit circuit d'oscillateur (26) inclut un circuit d'amplification inverse (28) et un circuit de phase (30) pour régler une phase d'un signal de sortie dudit circuit d'amplification inverse (28), et un signal de sortie dudit circuit de phase (30) est entré sur ladite unité de calcul de signal d'addition (34).

6. Gyroscope à oscillation selon la revendication 1, dans lequel ladite différence de phase vaut 0°, incluant en outre un circuit de correction de phase (40) pour modifier la phase du signal de sortie dudit circuit d'amplification inverse (28), et dans lequel un signal de sortie dudit circuit de correction de phase (40) est entré sur ladite unité de calcul de signal d'addition (34).

7. Gyroscope à oscillation selon la revendication 1, dans lequel ladite différence de phase vaut 0°, comprenant en outre un circuit de sommation (42) pour synthétiser un signal de sortie de la pluralité desdits dispositifs de pilotage/détection (14a, 14b) et un circuit de correction de phase (40) pour modifier une phase d'un signal de sortie dudit circuit de sommation (42), et dans lequel un signal de sortie dudit circuit de correction de phase (40) est entré sur ladite unité de calcul de signal d'addition (34).

8. Gyroscope à oscillation selon la revendication 1, dans lequel ladite différence de phase vaut 180°, ledit circuit d'oscillateur (26) inclut un circuit d'amplification inverse (28) et un circuit de phase (30) pour régler une phase d'un signal de sortie dudit circuit d'amplification inverse (28), et un signal de sortie dudit circuit de phase (30) est entré sur ladite unité de calcul de signal d'addition (34).

9. Gyroscope à oscillation selon la revendication 1, dans lequel ladite différence de phase vaut 180°, incluant en outre un circuit de correction de phase (40) pour modifier la phase du signal de sortie dudit circuit d'amplification inverse (28), et dans lequel un signal de sortie dudit circuit de correction de phase (40) est entré sur ladite unité de calcul de signal d'addition (34).

10. Gyroscope à oscillation selon la revendication 1, dans lequel ladite différence de phase vaut 180°, comprenant en outre un circuit de sommation (42) pour synthétiser un signal de sortie de la pluralité desdits dispositifs de pilotage/détection (14a, 14b) et un circuit de correction de phase pour modifier une phase d'un signal de sortie dudit circuit de sommation (42), et dans lequel un signal de sortie dudit circuit de correction de phase (40) est entré sur ladite unité de calcul de signal d'addition (34).

11. Gyroscope à oscillation selon la revendication 1, comprenant en outre un détecteur synchrone (50) où un signal qui est constitué par ledit signal de sortie différentiel dudit circuit différentiel (32) et par ledit signal de sortie de ladite unité de calcul de signal d'addition (34) est détecté en étant synchronisé avec des signaux correspondant à des vitesses angulaires de rotation dans le détecteur synchrone (50), et la sortie du détecteur synchrone est appliquée sur ladite unité de calcul de signal d'addition (34) de manière à commander le niveau d'un signal de sortie de l'unité de calcul de signal d'addition (34).

FIG.1

11

14b

12

F I G. 2

14a    14b

18a    18b

16a    16b

20a    20b

12

20c   16c   18c   14c

F I G. 3

F I G.4

FIG.5

FIG.6

FIG.7

FIG.8

FIG. 9

F I G.10

EP 0 711 975 B1

60

50

10

22

24

32

36

38

14a

14b

12

11

14c

34

28

30

26

F I G.11

F I G.12

EP 0 711 975 B1

FIG.13